# EUROPEAN PATENT APPLICATION

(11) **EP 3 734 125 A1**
(43) Date of publication of application: **04.11.2020**
(21) Application number: 20171690.9
(22) Date of filing: 28.04.2020
(51) Int. Cl.: F16K 1/44, F04B 53/06, F16K 17/20, F16K 24/00

(54) **AIR RELEASE VALVE**

(30) Priority: 30.04.2019 US 201916399190
(71) Applicant: The Gorman-Rupp Company, Mansfield, OH 44903 (US)
(72) Inventor: Liebhart, Larry P., Ohio, OH 44903 (US); Stoffer, Michael L., Ohio, OH 44903 (US); Redmond, Craig S., Ohio, OH 44903 (US)
(74) Representative: Schulz Junghans Patentanwälte PartGmbB

(57) **Abstract**

A release valve (20) for a self-priming pump includes a housing, a valve member (68), an exhaust outlet (104), a guide stem (78), a spring (88), and a bellows (90). The valve is positioned in a valve opening (54) in the housing and is movable between an open and a closed position. The open position permits the travel of air and fluid through the opening. The closed position closes the valve opening. The valve plug is positioned in the valve opening responsive to pressure in the flow passageway of the housing. The guide stem is coupled to the valve plug and the spring is coupled to the guide stem. The bellows surrounds the spring.

## Description

### Field

The technology described herein relates to an air release valve. In particular, the technology relates to an air release valve for use with a pump, such as a sewage pump.

### Background

The present invention relates generally to the self-priming pump art, and more specifically to a self-priming pumping system including an automatic air release valve for venting air from the system.

A typical pumping arrangement employed in sewage pumping stations includes at least one self-priming pump, a suction inlet pipe connected to the intake side of the pump, discharge plumbing connected to the discharge side of the pump, and a check valve 36 positioned on the discharge plumbing which prevents liquid from flowing back to the pump when it is shut down.

When the pump is started up, the air in the pumping chamber and any air in the inlet pipe must be evacuated to achieve a full prime. An air release valve is positioned in the discharge line of the pump for venting air from the system. The air release valve automatically closes when the system achieves full prime.

One prior art release valve is disclosed in U.S. Patent No. 3,870,436 to The Gorman-Rupp Company of Mansfield, Ohio. This valve is shown in Figs. 1 and 2. The valve represented an improvement over the art at the time of development because it was pressure responsive instead of flow responsive, stable, and reliable. The valve automatically closed when the pump was fully primed to prevent venting of liquid during the pumping cycle. The valve also had a self-flushing action to assist in removing debris in the valve when the pump was actuated.

However, because of the proximity of the discharge path to the release valve chamber, the release valve could become clogged with debris. It was not possible for an operator to know the pressure level in the valve. In addition, prior art valves would permit a small amount of continuous flow through the valve, even when closed.

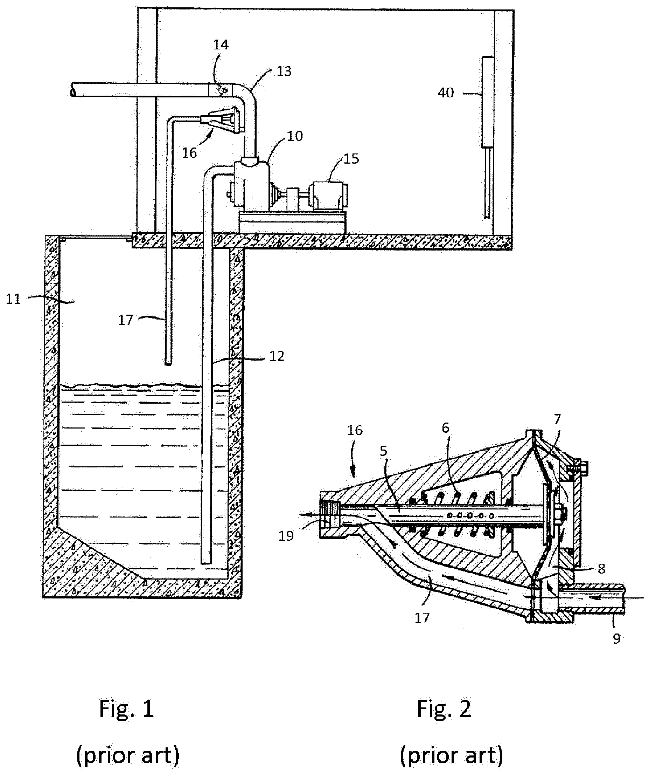

As shown in prior art Fig. 1, a sewage pumping system is shown which uses a self-priming centrifugal pump 10. The pump is positioned above a wet well 11, which collects the sewage to be pumped. A suction inlet line 12 is connected to the intake side of the pump and extends down into the wet well 11. Discharge plumbing 13 is connected to the discharge outlet 9 of the pump 10 and extends upwardly. The discharge plumbing 13 includes a one-way check valve 14 that deters liquid from returning to the pump 10. The pump is driven by an electric motor 15.

An air release valve 16 is shown installed between the pump 10 and the check valve 14 so that the inlet of the valve 16 communicates with the discharge outlet 9 of the pump 10 through the discharge plumbing 13. A flow path 17 extends through the valve 16, is connected to the outlet port 19 of the valve 16 and extends into the wet well 11. The valve 16 vents air and liquid that is evacuated from the suction inlet pipe 12 and the pumping chamber of the pump 10. The valve 16 automatically closes when the pump is fully primed to prevent the venting of liquid through the valve 16 during the pumping cycle. The outlet port 19 of the air release valve is connected to the flow path 17 of the pump 10, which travels at an approximately 45-degree angle. The angle was designed to deter plugging and blockage of the valve 16 because material could leave the valve chamber 8 by gravity when the system was shut down and the pressure reduced. The prior art valve 16 includes a diaphragm 7, that operates against a spring 6 and shaft 5. When the valve 16 is closed, the shaft 5 blocks the outlet port 19 of the valve 16.

While the below examples are depicted and described in the context of a sewage application, it should be noted that the same principles as discussed herein apply in other applications. For example, the same principles would apply in industrial and portable pump installations, among other installations.

### Summary

An air release valve for a self-priming pump is shown and described.

### Brief Description of the Drawing Figures

Fig. 1 is a schematic illustration of a sewage lift station incorporating a prior art air release valve;
Fig. 2 is a cross-sectional view of a prior art release valve;
Fig. 3 is a schematic illustration of a sewage lift station incorporating an air release valve according to the present invention;
Fig. 4 is an exploded view of the air release valve of the present invention;
Fig. 5A is a front view of an air release guide stem utilized with valve of Fig. 4;
Fig. 5B is a perspective side view of the air release guide stem of Fig. 5A;
Fig. 5C is a bottom view of the air release guide stem of Fig. 5A;
Fig. 6 is a cross-sectional view of the air release valve of Fig. 4, showing the valve in a first pressurized closed position;
Fig. 7 is a cross-sectional view of the air release valve similar to that shown in Fig. 6, but with the stem height adjusted upwardly in the housing with an adjustment nut tightened;
Fig. 8 is a cross-sectional view of the air release valve of Fig. 6, showing the valve in a second open position;
Fig. 9 is a cross-sectional view of the air release valve of Fig. 6, showing the valve in a third non-pressurized/closed position;
Fig. 10 is a perspective view of a self-priming pump having the air release valve of the invention installed thereon;
Fig. 11 is a top view of the pump of Fig. 10, showing the location of the air release valve on the top surface of the pump;
Fig. 12 is a front view of the pump of Fig. 10, showing the location of the air release valve on the top surface of the pump;
Fig. 13 is a cross-sectional view of the interior of the pump of Fig. 12, taken along line A-A of Fig. 12;
Fig. 14 is a side view of the pump of Fig. 10, showing the location of the air release valve on top of the pump;
Fig. 15 is a cross-sectional view of the pump of Fig. 14, taken along line B-B of Fig. 14, showing the interior of the pump and air release valve;
Fig. 16 is a top view of an alternative embodiment of the air release valve according to the invention;
Fig. 17 is a perspective front view of the air release valve of Fig. 16;
Fig. 18 is a front view of the air release valve of Fig. 16; and
Fig. 19 is a cross-sectional side view of the air release valve of Fig. 16.

### Detailed Description

The technology described herein relates generally to an example air release valve 20, such as a release valve that is used with self-priming pumps 22. In particular, the air release valve 20 described herein is useful with self-priming sewage pumps 22, which are designed to handle a mixture of liquids and solids. Prior art release valves 16 were positioned on discharge lines 13 of the pump (shown in Fig. 1) and were prone to clogging. The example air release valve 20 is relocated from the discharge line 24 of the pump 22 and positioned on the pump housing 26 itself, making it easy to service and less-likely to clog. The air release valve 20 is designed to substantially completely deter bypass of fluids through the valve 20 when the valve 20 is closed and the pump 22 is pressurized. Prior art valves 16 permitted some bypass even when the valve 16 was closed.

The valve 20 is mounted on the pumps fill port 28 of the pump housing 26 instead of the discharge pipe 24. This permits standard discharge piping 24 without requiring modification or customization of piping to provide access to the valve 20.

The air release valve 20 is advantageously adjustable for different applications, making the need for customized valves somewhat obsolete. The design provides a visual indicator 30 when the pump is pressurized, as will be discussed in greater detail below. This indicator 30 provides the user with information as to whether or not the pump is in a pressurized state.

The example air release valve 20 is used with self-priming pumps 22. When the pump 22 is initially started, or if it loses prime, the pump 22 and suction inlet line 34 contain air that must be evacuated. As the pump 22 primes, the air is released from the system through the release valve 20. During priming, the pump 22 may also release some fluid along with the air. The release of air through the release valve 22 may occur in stages, similar to burping, where pressure builds, some air is released, air pressure builds again, air is released, etc., until the pump 22 is fully primed/air is evacuated. The total time to prime can be from a few seconds to several minutes depending on the amount of air in the system. Any fluid that is released with the air is recirculated to a wet well 11.

When the air has been fully released such that the pump 22 has primed, the pressure of the liquid in the pump chamber 32 acts on the release valve 20 to fully close the release valve 20, thus preventing further release of air/liquid through the valve 20. When the valve 20 is in the closed and pressurized position, an indicator 30 extends from the top of the valve housing to indicate to a user that the valve 20 is under pressure.

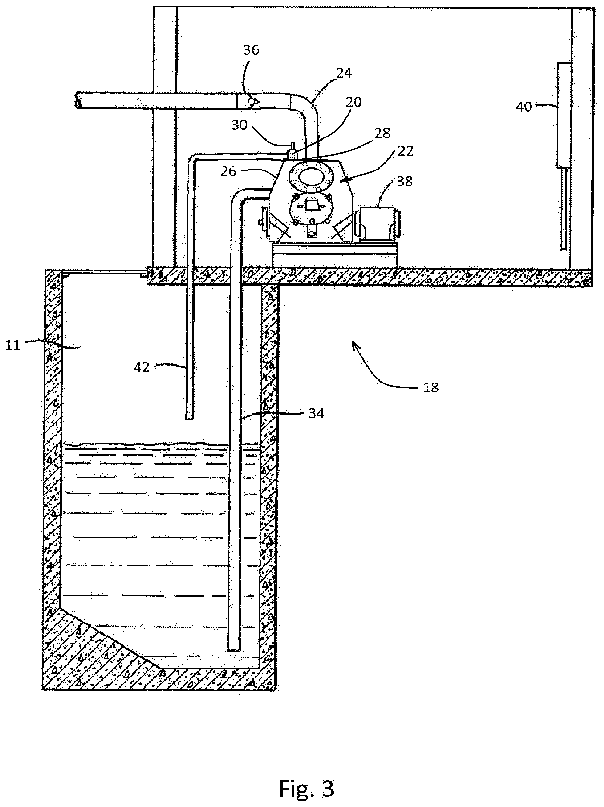

Fig. 3 depicts a sewage pumping system 18 that uses a self-priming centrifugal pump 22. The pump 22 is positioned above a wet well 11, which collects the sewage to be pumped. A suction inlet line 34 is connected to the intake side of the pump 22 and extends down into the wet well 11. Discharge plumbing 24 is connected to the discharge outlet 9 of the pump 22 and extends upwardly. The discharge plumbing 24 includes a one-way check valve 36 that deters liquid from returning to the pump 22. The pump 22 is driven by an electric motor 38. The pump 22 is controlled by a control system 40.

The air release valve 20 is shown installed on a top end of the pump 22 and is not coupled to the discharge line 24. A flow path 42 is connected to the outlet port 104 of the valve 20 and extends into the wet well 11 such that any liquid that exits the valve during priming is recirculated through the system.

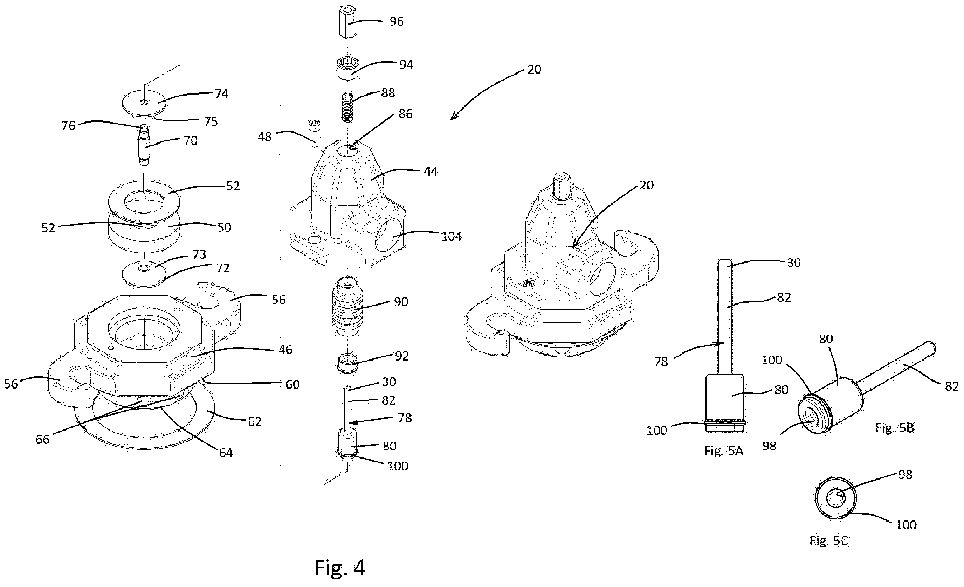

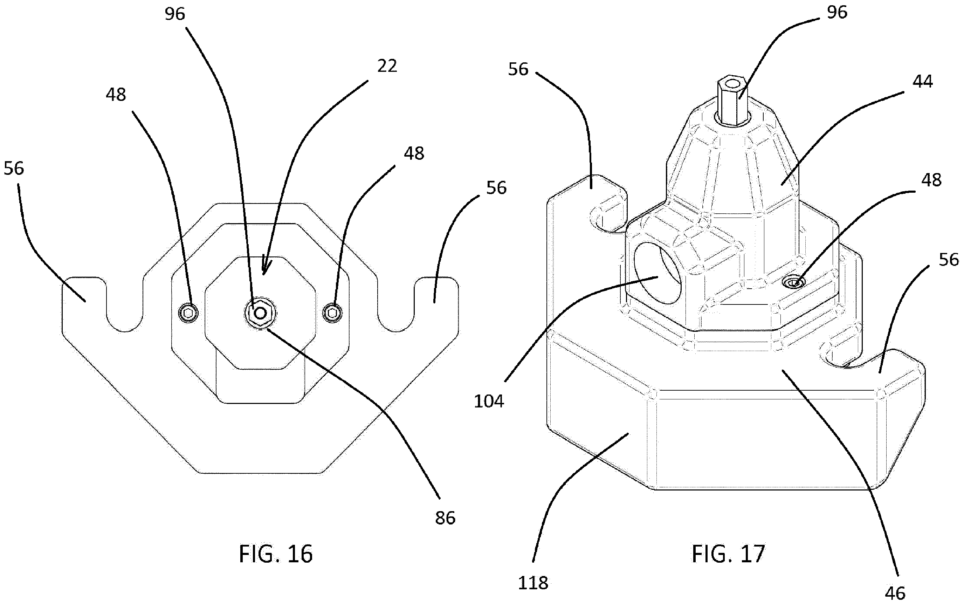

Figs. 4-15 depict a first embodiment of the air release valve 20, with the valve plug 68 having an upper cross-member 74 and a lower cross-member 72. Figs. 16-19 depict a second embodiment of the air release valve 20, with the valve plug having a single cross-member.

Fig. 4 depicts the construction of the first embodiment of the air release valve 20. As shown, the valve includes a housing with an upper body or cap 44 and a lower body 46. The upper body 44 is connected to the lower body 46 via two screws 48, such as socket head screws. A valve seat 50 is positioned in a central bore between the upper body 44 and the lower body 46. A backing plate 52 is positioned on top of the valve seat 50. As shown, the valve seat 50 and backing plate 52 are circular and have a central bore 54, which is the valve opening. The valve seat 50 is compressed between the upper body 44 and lower body 46 and provides an additional function of sealing between the upper body 44 and lower body 46 so that no liquid can pass through the valve 20 other than through the valve opening 54.

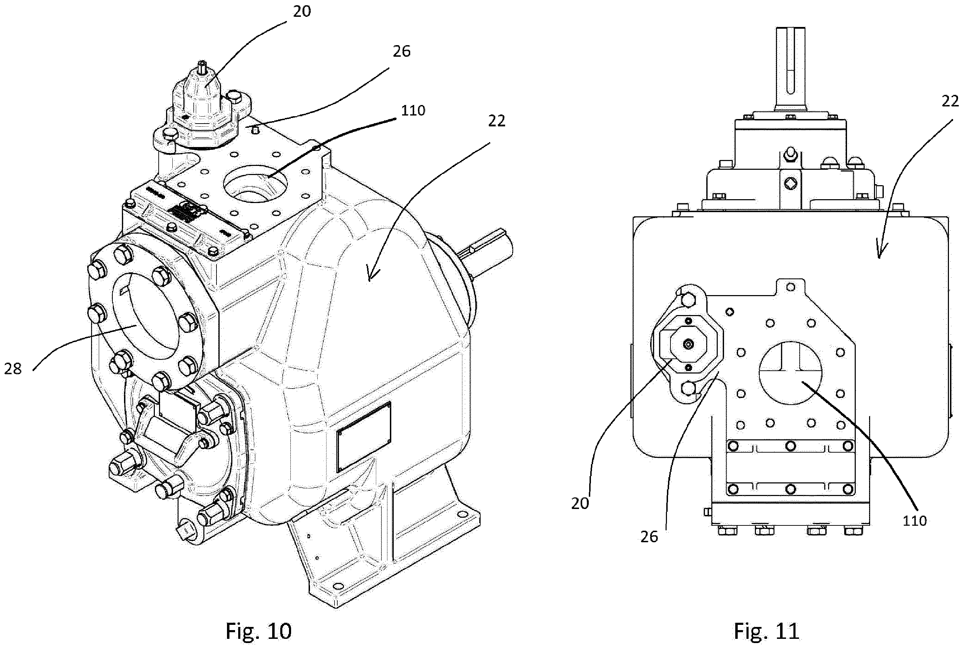

The upper body 44 and lower body 46 are shown to have a generally octagonal exterior shape, but could have other shapes, such as a rounded exterior. The lower body 46 includes arms 56 that extend outwardly from the lower body 46 on opposites sides thereof. The arms 56 are used to couple the valve 20 to a top surface of a pump 22 via screws 106, shown in Figs. 10 and 16. The lower body 46 has a shelf 60 that is configured to seat on a pump surface. A gasket 62 is provided between the shelf 60 and the pump surface to deter leakage at the connection. A lower end 64 of the lower body 46 is shown as being cylindrical and extends downwardly from the lower body 46. The lower end has a diameter that is smaller than the diameter of the shelf 60. The lower end 64 of the lower body 46 seats into the pump chamber 32.

The lower end 64 has through holes 66 that define flow passageways 66 in the valve 20. These flow passageways 66 communicate with the pump chamber 32 and liquid and/or air are permitted to travel through the through holes 66 in the lower end 64. This permits the valve 20 to be pressurized at the same pressure as the pump chamber 32.

A valve plug 68 is positioned in the central bore between the upper body 44 and lower body 46 and extends through the valve opening 54. The valve plug 68 is substantially "I" shaped and includes a valve stem 70 that extends through the valve opening 54, a lower cross-member 72 that is coupled to a lower end of the valve stem 70, and an upper cross-member 74 that is coupled to an upper end of the valve stem 70. The valve stem 70 is positioned vertically through the opening 54 in the valve seat 50. An upper surface 76 of the lower cross-member 72 mates with a bottom surface of the valve seat 50 to close the valve opening 54 when pressurized. When the lower cross-member 72 is seated against the valve seat 50, the valve 20 is closed. A lower surface 77 of the upper cross-member 74 mates with an upper surface of the valve seat 50 to close the valve opening 54 when not pressurized. When the upper cross-member 74 mates with the upper surface of the valve seat 50, the valve 20 is sealed shut.

The parts of the valve plug 68 are fixed together into an integral part. For example, the valve stem 70 may include screw threads or other coupling members that mate with threads on the upper and lower cross-members 74, 72 so that the stem 70 is screwed into the cross-members 72, 74 to form the integral part. The parts could be coupled by other means, including, but not limited to, press fit, adhesive or welding, depending upon the materials utilized. The valve stem 70, when attached to the lower cross-member 72, provides a substantially flat surface at the bottom of the valve plug 68. The valve stem 70, when attached to the upper cross-member 74, protrudes from a top surface of the upper cross-member 74. This protrusion 76 is then coupled with a guide stem 78.

Referring again to Fig. 4, the guide stem 78 is shown to have a lower part 80 and an upper part 82. The lower part 80 is generally cylindrical in shape and has an opening 98 in the lower surface thereof for mating with the protrusion 76 of the valve stem 70. The upper part 82 of the guide stem 78 has a smaller diameter than the diameter of the lower part 80 and is rod-shaped. The upper end 30 of the guide stem 78 extends through an opening in the upper body 44 to serve as an indicator 30 when the pump 22 is pressurized.

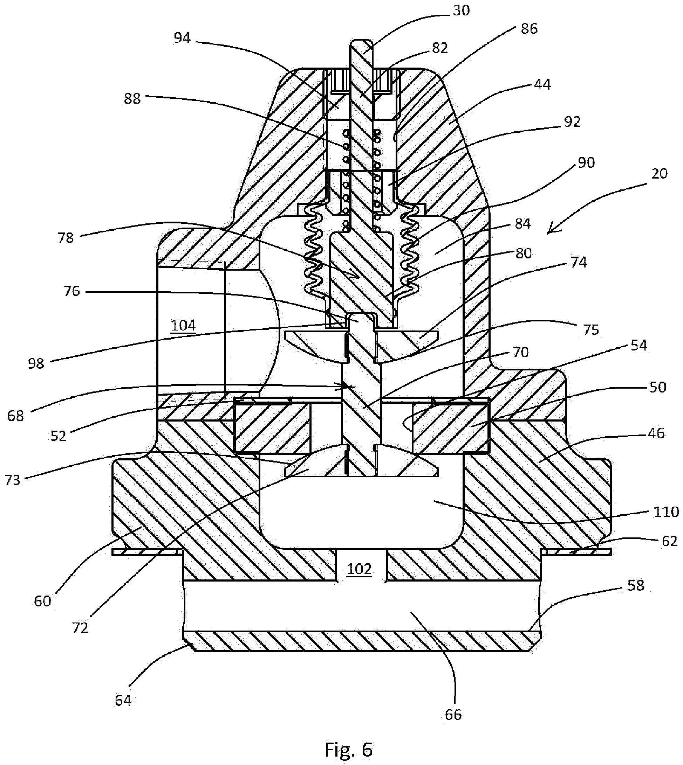

The upper housing 44 has a centrally disposed upper valve chamber 84 (shown in Fig. 6) and a centrally disposed channel 86 that is positioned above the upper valve chamber 84 and extends to atmosphere. The upper valve chamber 84 is larger in diameter than the channel 86. The guide stem 78 seats in the channel 86 and is movable longitudinally up and down within the channel 86. A spring 88 is positioned around the upper part 82 of the guide stem 78, and a bellows 90 surrounds the spring 88 and the upper part 82 of the guide stem 78. A bellows bushing 92 is positioned inside the channel 86 and assists in locking the bellows 90 into position around the guide stem 78 and spring 88. The bellows 90 is pressed between the walls of the channel 86 and the exterior of the bellows bushing 92.

The bellows bushing 92 serves as a guide for movement of the upper part 82 of the guide stem 78 within the channel 86. A lower end of the bellows bushing 92 seats around the guide stem 78 and an upper end of the bellows 90 seats around the bellows bushing 92. The bellows bushing 92 includes a central bore. Both the upper part 82 of the guide stem 78 and the spring 88 extend through and are movable within the central bore of the bellows bushing 92. The bellows 90 provides sealing around the guide stem 78 and spring 88 and helps to deter debris from inhibiting the function of the guide stem 78 and spring 88 during operation of the valve 20.

The channel 86 also includes an adjuster screw 94. The adjuster screw 94 may translate up and down within the channel 86 by turning the adjuster screw 94 with an adjusting key 96. The adjusting key 96 is shaped like an allen wrench with a central bore. The spring 88 abuts a lower surface of the adjuster screw 94 when the guide stem 78 moves upwardly. The spring 88 does not always abut the adjuster screw 94. Whether the spring 88 abuts the adjuster screw 94 is a function of the size of the spring 88, the position of the guide stem 78, and the position of the adjuster screw 94 within the channel 86. Further discussion of the interaction of the spring 88 with the adjuster screw 94 is provided in connection with Figs. 6-9.

After the inner parts of the valve 20 are assembled inside the lower and upper housings 44, 46, the upper housing 44 is positioned on top of the valve seat 50 and the lower housing 46 of the valve 20. Cap screws 48 extend through holes in the upper housing 44 into holes in the lower housing 46 to couple the upper and lower housings 44, 46 together. The valve 20 is then ready to be positioned on a pump housing 26.

Figs. 5A-5C depict additional views of the guide stem 78. As previously discussed, the guide stem 78 has a lower part 80 and an upper part 82. Both the lower and upper parts 80, 82 are cylindrical in shape. The lower part 80 has a cylindrical opening 98 extending from a bottom surface thereof into the interior of the lower part 80. The guide stem 78 also includes a protruding ring 100 positioned around a lower end of the lower part 80. The protruding ring 100 is provided to aid in holding the bellows 90 in place around the lower part 80.

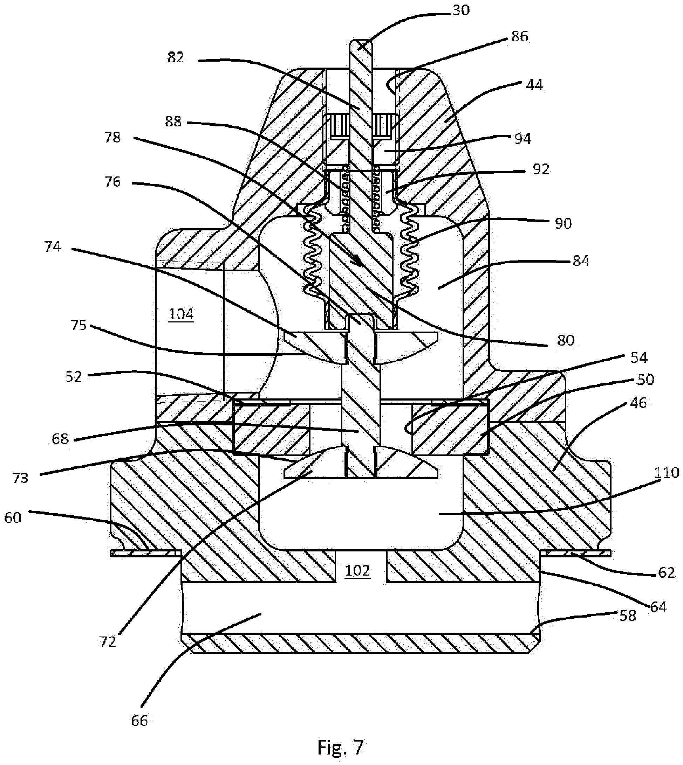

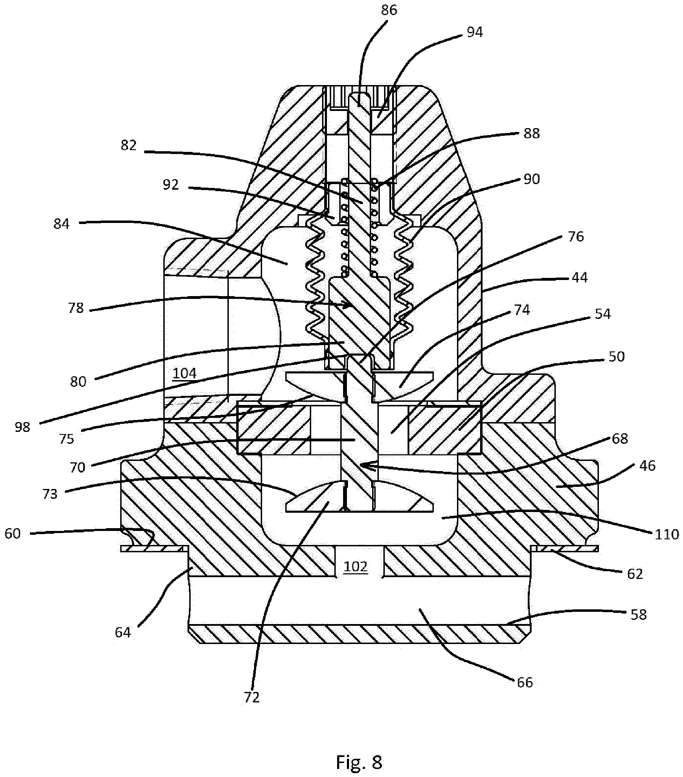

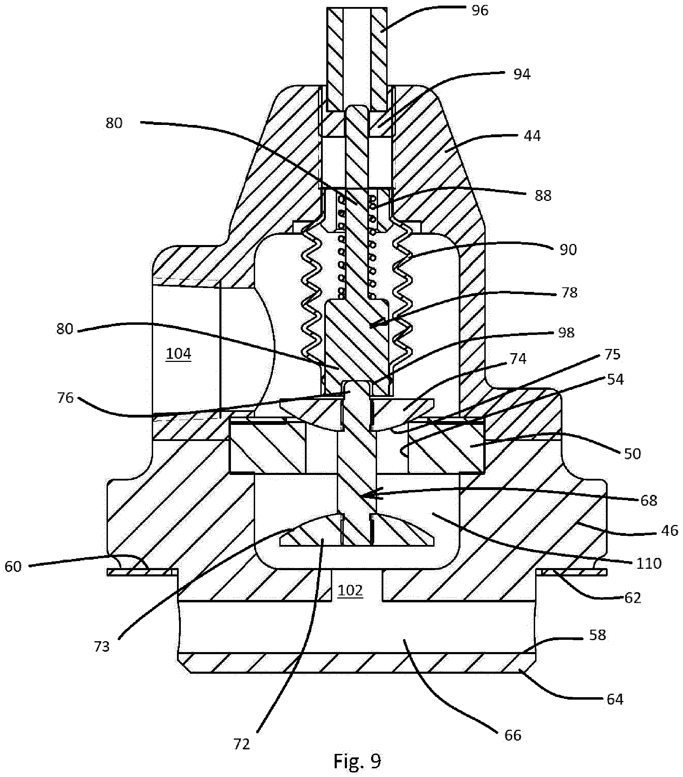

Referring now to Figs. 6-9, cross-sectional views of the first embodiment of the valve 20 in different operating positions are shown. Fig. 6 depicts the valve 20 in a first, closed position associated with a pressurized pump. Fig. 7 also depicts the valve 20 in a first, closed position associated with a pressurized pump, but with the adjuster screw 94 being at a different position than that of Fig. 6. Fig. 8 depicts the valve 20 in a second, open position, which occurs while the valve 20 is priming. Fig. 9 depicts the valve 20 in a closed, third position, which occurs when the pump 22 has lost pressure, such as when it is leaking or turned off.

Referring to Fig. 6, the valve 20 includes an inlet port 102 and an outlet port 104. The outlet port 104 is for expelling any air, fluids, or solids that are released through the valve 20 when the valve 20 is in the second position. The inlet port 102 is connected to the flow passageways 66 that are positioned in the lower end 64 of the lower body 46. The flow passageways 66 define a flow path in the lower body 46 and may include a single path or multiple paths.

In the embodiment shown, the flow passageways 66 comprise three (3) flow paths that extend horizontally through the lower body 46, with the flow passageways 66 being substantially equally spaced around the circumference of the lower end 64. The multiple flow passageways 66 of this embodiment cross one another in a central area of the main lower body 46 at the inlet 102 to the valve 20 before exiting at an opposite side of the lower body 46. The flow passageways 66 in the lower body 46 communicate directly with the pump chamber 32. While the passageways 66 may be sized based upon the particular application, one presently contemplated size is ½" in diameter. The size of the passageways 66 will vary depending upon the size of the pump and the amount of air to be evacuated from the system. While the flow passageways are shown as extending all the way through the base of the valve, this is not required.

Because the flow passageways 66 are provided in the lower end 64, this helps to alleviate plugging and clogging of the air release valve 20. The valve inlet 102 only communicates with material that travels through the flow passageways 66 and not with everything in a discharge line 24, as with the prior art valves.

The valve 20 is opened and closed by movement of the valve plug 68, which is positioned in the valve opening 54 of the valve seat 50. The valve plug 68 translates up and down in the valve opening 54 between closed and open positions. As previously described, the valve plug 68 is "I" shaped, with upper and lower cross-members 74, 72 and a valve stem 70 coupled between the upper and lower cross-members 74, 72. The cross-members 72, 74 have a flat outer surface and a rounded, curved, or arc-shaped inner surface. The rounded surface contacts the valve seat 50 to close the valve opening 54. Due to the rounded shape of the surface of the cross-members 72, 74, the valve 20 can self-locate on the valve opening 54 in the rubber seat 50.

It should be noted that other configurations for the lower surface 77 of the upper cross-member 74 and the upper surface 76 of the lower cross-member 72 may be utilized and the release valve 20 will still operate effectively. For example, the upper 76 and lower 77 surfaces may be flat or conical. Other round shapes, other than those shown can also be used.

Fig. 6 depicts the valve seat 50 positioned between the upper and lower parts of the housing 44, 46. The valve seat 50, which is made of a resilient material, provides a seal between the upper part 44 and the lower part 46 so that no material can travel around the valve seat 50. The only way for material to travel through the valve 20 is through the valve opening 54. Fig. 6 depicts the flow passageway 66 in the lower end 64 and how the flow passageways 66 communicate with the valve 20 through the valve inlet 102. Material travels first into a lower valve chamber 110, then through the valve opening 54 in the valve seat 50, then through an upper valve chamber 84, and, lastly, out through the valve outlet 104.

Fig. 6 depicts the adjuster screw 94 in its highest position, at the top of the channel 86 in the upper housing 44. The channel 86 is preferably cylindrical in shape and has a constant diameter along its length.

The valve 20 of Fig. 6 is in a first, closed position, where the lower cross-member 72 abuts the valve seat 50 and closes the valve opening 54. This position occurs when the pump 22 is pressurized. The pressure acts on the bottom of the valve plug 68 and moves the valve plug 68 upwardly, against any downward pressure that is applied to the valve plug 68 by the bellows 90 and spring 888 (when the spring 88 is activated).

In the embodiment shown in Fig. 6, the adjuster screw 94 is at its highest point. When the valve plug 68 closes the valve opening 54, it is evident that the spring 88 doesn't impact the adjuster screw 94. Thus, the spring 88 is inactive in this embodiment and the bellows 90 is the only device providing spring pressure on the valve plug 68. The upper rounded surface of the lower cross-member 72 is shown and demonstrates that even if there is some movement horizontally of the valve plug 68, the plug 68 will still seal the valve opening 54.

Fig. 6 also depicts the connection between the protrusion 76 of the valve plug 68 and the opening 98 in the guide stem 78. The protrusion 76 is shown as being slightly longer than the depth of the opening 98 in the guide stem 78. In addition, the guide stem 78 is not connected to the protrusion 76, but simply seats on top of the protrusion 76. This permits for more consistent operation and has been found to allow the guide stem 78 to move more freely in the channel 86. The force of spring 88 and the bellows 90 hold the guide stem 78 on the protrusion 76 the valve plug 68. Dynamic pressure holds the guide stem 78 up.

The connection between the valve protrusion 76 and the guide stem 78 is similar to a ball and joint socket. It permits some clearance/play between the protrusion 76 of the valve plug 68 and the opening 98 in the guide stem 78. This allows the valve plug 68 and guide stem 78 to remain aligned with one another for proper operation. Because the valve plug 68 and guide stem 78 are not physically joined to one another, the design allows for some misalignment and permits the guide stem 78 to continue to operate without binding up in the channel 86, which allows the valves to fully seat.

As shown, the bellows 90 surrounds the guide stem 78 at a lower end thereof and surrounds the bellows bushing 92 at the upper end thereof. The bellows 90 helps to protect the spring 88 to keep it clean and operating smoothly. The spring 88 extends through an interior of the bellows 90 and is positioned around the upper part 82 of the guide stem 78. Because the adjuster screw 94 is set at its highest point, the spring 88 is not engaged between the adjuster screw 94 and the lower part 80 of the guide stem 78.

The bellows 90 is used as a biasing element because it adds resistance to racking of the valve plug 68 and helps the valve 20 to close in the third position. The bellows 90 may be made of rubber, or of other materials. As the air release valve 20 is releasing air, the release cycle is aided by the bellows 90. The bellows 90 provides some downward pressure to the valve plug 68 while the spring 88 is not acting on the plug 68. This smaller amount of downward pressure permits the valve plug 68 to open intermittently in response to pressure build up inside the lower valve chamber 110. The total movement of the valve plug 68 is about ½" during priming. Once primed, the valve quickly closes and blocks the flow. Because of this short time to close, the likelihood of debris traveling through the valve opening 54 is reduced.

Fig. 7 is similar to Fig. 6 but shows the adjuster screw 94 positioned at its lowest location. In this embodiment, more downward pressure is applied to the valve plug 68 because the spring 88 engages a lower surface of the adjuster screw 94. Fig. 7 shows the valve in a closed position, where the lower cross-member 72 abuts the valve seat 50 to close the valve 20. The bellow 90 is shown as being fully compressed and the spring 88 is shown as being fully or nearly fully compressed. The spring 88 will act against the pressure in the system to maintain the valve plug 68 in an open state and will only close when the pressure exceeds the spring 88 and bellows 90 downward forces. As with the prior embodiment, an upper end 82 of the indicator 30 extends through the top end of the channel 86 to indicate to a user that the valve is under pressure.

Fig. 8 is like Fig. 6, but shows the valve plug 68 in the second position, which occurs while the pump 22 is priming. Pressure in the pump 22 has not yet reached the point of closing the valve opening 54 and air is permitted to be released through the valve opening 54 into the outlet 104.

Fig. 9 is similar to Fig. 8, but shows the valve in the third, closed position. This position occurs when the pump 22 is shut down or has otherwise lost pressure. In this embodiment, the valve plug 68 weight and the downward force of the bellows 90 pushes the valve plug 68 down and permits the lower surface 77 of the upper cross-member 74 to engage the valve seat 50 and close the valve opening 54. This prevents the bypass of any fluids or air through the valve 20 when the pump 22 is shut down. In this position, any fluid or debris can also travel downwardly out of the lower valve chamber 110 into the flow passageways 66.

The valve 20 is held in its third position due to the bellows 90, the weight of the valve plug 68, and any vacuum in the system. Water in the suction inlet 34 acts to pull down the valve plug 68. Upon starting the pump 22, air from the pumping chamber 32 will be forced out through the valve opening 54 as shown in FIG. 8. As the pump operation continues, liquid will begin to flow with the air until sufficient pressure has been generated in the pump chamber 32 to overcome the force. At that time the pump 22 will have been fully primed and valve plug 68 will be forced into the position of FIG. 6 to its closed position. Premature closing of the valve 20 can be prevented to assure full prime by proper preload adjustment of the spring 88 using adjuster screw 94.

As shown in Figs. 6-9, the flow path through the valve is conducive to the travel of air through the system, but not as conducive to the travel of water and debris through the system due to the labyrinth nature of the flow passageway 66 and the connection between the flow passageways 66 and the valve inlet 102. The labyrinth path helps to limit turbulence inside the valve 20, which deters clogging caused by solids in the flow. If clogging were to occur, the valve 20 is easy to clean. All that is required is the removal of the two cap screws 48.

The valve 20 is adjustable, as discussed above, for different applications. The adjuster screw 94 allows the user to adjust the closing pressure of the valve 20 to the specific installation. This adjustment is provided by the adjuster screw 94 and the spring 88 that is coupled to the guide stem 78. The spring 88 may be adjusted upwardly and downwardly. When adjusted upwardly, the spring 88 has a greater travel distance. When the spring 88 is adjusted downwardly, the spring 88 has a smaller travel distance and a greater resistance sooner than when the spring 88 is adjusted upwardly. The valve plug 68 moves with the movement of the spring 88. As such, the closing force acting on the valve plug 68 by the spring 88 is adjustable up and down based upon the position of the adjuster screw 94.

Fig. 10-15 depicts the valve 20 installed on a pump 22. Fig. 10 depicts an exterior view of a pump 22. The discharge opening 9 is positioned in the center top of the pump 22 and the valve 20 is shown adjacent the discharge opening 9 on an upper surface of the pump 22. The valve 20 is shown attached to the pump 22 with two screws 106 that extend through the arms 56 on the lower housing 46. Fig. 11 shows a top view of the pump 22, again showing the location of the valve 20 on the top surface of the pump housing 26. Fig. 11 also shows the drive shaft for the pump, which would be coupled to a motor 38 or other driver such as a diesel engine or hydraulic motor, and an inlet 106 to the pump 22 that would be coupled to a waste pool.

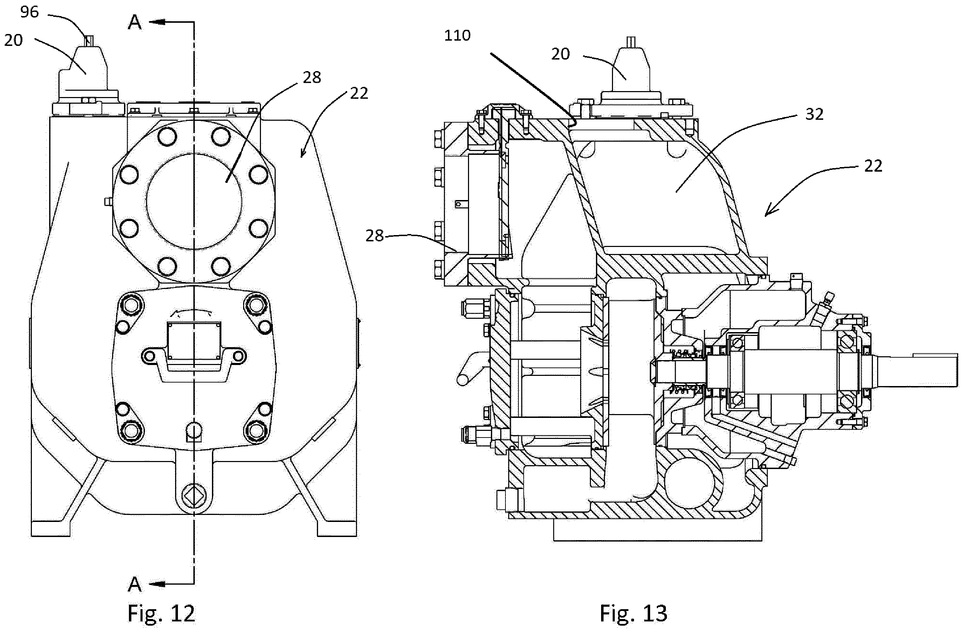

Fig. 12 depicts a front view of the pump 22, showing the inlet side of the pump 22. Fig. 13 depicts the inner workings of the pump 22 and shows the pump inlet 106, the pump chamber 32, and the impeller 108 that creates suction in the pump chamber 32. The valve 20 is positioned adjacent the pump chamber 32.

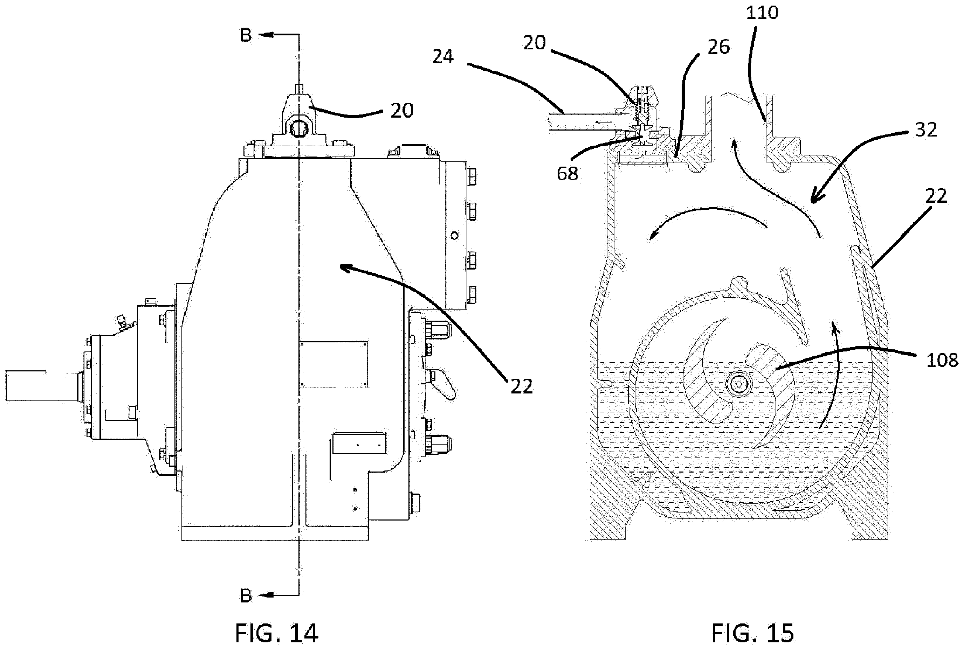

Fig. 14 depicts a side view of the pump 22, showing the drive shaft and the valve 20 positioned on an upper surface of the pump 22. Fig. 15 depicts the impeller 108 and the volute scroll that directs fluid through the outlet of the pump to be discharged. The impeller 108 spins and fluid enters the pump chamber 32. Discharge occurs through a box around the volute scroll.

Fig. 15 also shows flow lines when the pump is filled with fluid (which may include debris). As shown, the pump 22 is in a priming state, with the pump chamber 32 being partially filled with water. The valve 20 is in an open position so that air can vent from the system. Fluid circulates through the pump 22 due to the movement of the impeller 108, with some fluid exiting the pump 22 upwardly through the pump discharge port 110 and some fluid being recirculated downwardly to the impeller 108. Fig. 15 also depicts the location of the valve 20 as being offset from the main flow path of the pump discharge port 110 so that the valve 20 can remain substantially clog-free.

Figs. 16-19 depict a second embodiment of the air release valve 20 where the valve 20 includes a valve plug 68 having a single cross-member 112 and multiple valve seats 114. Fig. 16 depicts a top view of the valve 20, showing the arms 56 that are used for coupling the valve 20 to the pump housing 26. The arms 56 are coupled to the pump housing with screws/bolts, shown in Fig. 10. Fig. 16 also depicts the screws 48 that are used to couple the upper valve body 44 to the lower valve body 46.

Fig. 17 depicts a perspective view of the valve 20, showing the inclusion of a skirt 118 around the lower periphery of the lower valve body 46. The skirt 118 is used for the posting of logos and warning/instructional plates thereon. The skirt 118 does not change the performance of the valve 20. The first embodiment of the valve, discussed above in connection with Figs. 4-15, may also include a skirt 118, if desired. Fig. 17 also depicts an adjuster key 96 extending from the channel 86 at the top end of the valve 20.

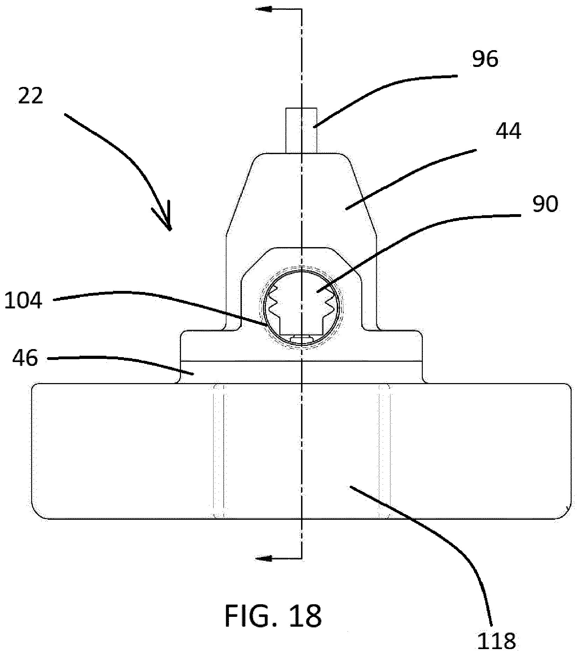

Fig. 18 depicts a front view of the valve 20 showing the outlet 104 of the valve 20. The bellows 90 can be seen through the outlet 104 in the interior of the valve 20. Fig. 18 also depicts the large skirt 118 that is used for logo placement or warning/instructional plates.

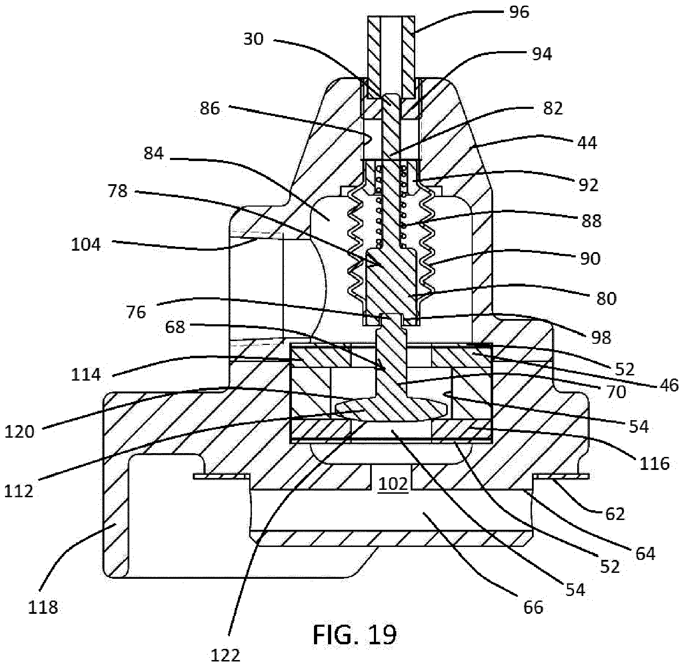

Fig. 19 depicts a cross-sectional view of the valve 20, showing the interior of the valve 20 when the valve 20 is in an unpressurized state. As is evident, the valve 20 includes an upper valve seat 114 and a lower valve seat 116. Each of the valve seats 114, 116 are backed by a rigid ring/backing plate 52. The upper valve seat 114 also serves as a seal between the upper valve body 44 and the lower valve body 46.

The guide stem 78, bellows 90, and spring 88 are substantially the same as the parts described above in connection with the first embodiment. The valve plug 68 is different from the valve plug discussed with the first embodiment in that a single cross-member 112 is utilized, with the cross-member 112 having a top sealing member 120 associated with a top surface of the cross-member 112 and a bottom sealing member 122 associated with the bottom surface of the cross-member 112.

The top sealing member 120 of the cross-member 112 is coupled to a valve stem 70 and the valve stem 70 is coupled to the guide stem 78. The valve stem 70 has a post or protrusion 76 that seats inside a recess 98 in the bottom end 80 of the guide stem 78. As with the first embodiment, the post 76 seats inside the recess 98 in the bottom end of the guide stem 78 but is not fixed inside the recess 98. The post 76 is movable within the recess 98 to permit the guide stem 78 to angle slightly relative to the walls of the channel 86 in which the guide stem 78 rides.

The top sealing member 120 is shown as having a curved surface for mating with the upper valve seat 114, similar to a convex surface with the open side of the convex shape facing downwardly. The bottom sealing member 122 has a curved surface for mating with the lower valve seat 116, similar to a convex surface with the open side of the convex shape facing upwardly. The top and bottom sealing members 120, 122 are shown as being arcuate, but could have other shapes, including flat, rounded, conical, or other shapes.

The valve 20 in Fig. 19 is shown in an unpressurized state. In this state, because the system is not pressurized, the bottom sealing surface 122 rests on the lower valve seat 116. The valve stem 68 may be biased downwardly by the bellows 90 and/or spring 88 or may simply fall downwardly by gravity.

In a second state, which is not shown, the pump system is fully primed and under pressure. In this state, the valve plug 68 moves upwardly by pressurized fluid in the system until the upward movement of the valve plug 68 is halted by contact of the top sealing member 120 with the upper valve seat 114. In this position, the valve 20 is sealed and does not permit fluid to travel through the valve discharge 24.

In a third state, which is not shown, the pump system is priming and is partially pressurized. In this state, the valve plug 68 is positioned intermediate between the upper valve seat 114 and the lower valve seat 116 to permit fluid to travel around the cross-member 112. As the pressure increases in the system, the valve plug 68 moves upwardly until the top sealing member 120 contacts the upper valve seat 114 and moves into the second state.

In the second state, the valve plug 68 is in its upper-most position inside the valve chamber. In this state, the indicator 30, which is formed at the top end of the guide stem 70, extends out of a top end of the valve 20. Figs. 17-19 depict the adjustment tool or adjusting key 96 for adjusting the height of the adjuster screw 94 inside the guide stem channel 86 in the valve 20. The adjustment tool 96 is insertable when needed to adjust the adjuster screw 94. The adjustment tool 96 is removed after the adjuster screw 94 has been adjusted. When the adjustment tool 96 is removed, the top surface of the valve housing is the uppermost surface of the valve 20. When the valve 20 is under pressure, the indicator 30 extends upwardly above the uppermost surface of the valve. While the above valve 20 has been described in the context of a valve 20 for use in a sewage pumping system, the valve 20 could be used in other applications, as known by those of skill in the art. The valve could be sized based upon the application.

The valve housing 44, 46 is made of metal, such as iron, steel or stainless steel. Other materials may also be used, such as polymers and plastics. The valve plug 68 may be made of a polymer, metal, or other materials, as long as it is corrosion resistant and can withstand pressures present inside the pump 22. The bellows 90 may be made of an elastomeric material. The valve seat 50 may be made of a rubber or other resilient material. The backing plate 52 of the valve seat 50 may be made of metal, such as stainless steel. Other materials may be used for the various parts, as known by those of skill in the art.

According to one embodiment of the invention, a release valve for a self-priming pump having a pumping chamber includes a housing, a pressure responsive valve member, a valve outlet, and a guide stem. The housing has a flow passageway extending therein, with the flow passageway having at least one flow passageway inlet for coupling with the pumping chamber. The pressure responsive valve member is positioned in at least one valve opening in the housing and is movable between an open and a closed position, with the open position permitting the travel of air and fluid through the opening and the closed position closing the at least one valve opening. The valve member is movable between a first closed position in which a surface of the valve member blocks the at least one valve opening, a second open position in which flow is permitted through the at least one valve opening, and a third closed position where a surface of the valve member blocks the at least one valve opening.

The valve outlet is coupled to the housing and positioned downstream of the at least one valve opening. Flow moves through the valve outlet when the at least one valve opening is in the second open position. The guide stem is coupled to the valve member for assisting in aligning the valve member with the at least one valve opening and permitting movement of the valve member up and down.

The valve is operable between a first position, a second position and a third position. In the first position, an upper surface of the valve member abuts a lower surface of the at least one valve opening to close the at least one valve opening. In the third position, a lower surface of the valve member abuts an upper surface of the at least one valve opening to close the at least one valve opening. In the second position, the at least one valve opening is not blocked by the valve member, permitting at least air to travel through the at least one valve opening to the valve outlet.

The release valve may also include a spring coupled to the guide stem. The spring has a biasing state and an unbiasing state dependent upon the location of the guide stem in the housing. The release valve may also include a bellows surrounding the spring. The bellows may optionally provide a biasing function.

The housing may have a channel at a top end thereof that is open to the atmosphere. The guide stem may be positioned at least in part in the channel.

The release valve may also include an indicator coupled to the guide stem. The indicator travels with the movement of the guide stem. When the valve is in the first position, the indicator extends out of the opening at the top end of the channel to indicate the presence of pressure. The position of the valve may be determined based upon pressure inside the flow passageway.

The valve member is a plug that may be "I"-shaped. The valve member may include a valve stem having a length, a top cross-member coupled at a top end of the valve stem, and a bottom cross-member coupled at a bottom end of the valve stem. The top cross-member may have a rounded or arc-shaped lower surface and the bottom cross-member may have a rounded or arc-shaped upper surface.

Alternatively, the valve member may be substantially "T"-shaped. The plug may include a cross-member and a valve stem. The cross-member may be positioned transverse to the valve stem and the valve stem may be coupled to at least an upper surface of the cross-member to form the T-shape, with the cross-member being a plug.

The cross-member may have an upper surface and a lower surface. The upper surface may be one or more of curved, arc-shaped, convex, rounded, and flat. The lower surface may be one or more of curved, arc-shaped, convex, rounded, and flat. The valve stem may form a substantially vertical leg of the T-shape.

The flow passageway may also include at least one flow passageway outlet in communication with the at least one flow passageway inlet. The valve member may be biased downwardly by one or more of the spring or the bellows.

The valve stem may be positioned above the valve member. A vertical position of the valve stem may move upwardly and downwardly based upon movement of the valve member. The valve stem may also include a guide stem coupled to an upper end of the valve stem.

The flow passageway may be a bore through a bottom end of the housing. The bore may be in direct communication with the pump chamber. The flow passageway may include a plurality of bores, each extending in a different direction from one another. The bores may extend through the bottom end of the housing and cross paths with each of the other bores. The plurality of bores may be in direct communication with the pump chamber.

The at least one valve opening may be positioned through a single valve seat. The single valve seat may be resilient. The at least one valve opening may be positioned through a plurality of valve seats, and the plurality of valve seats may be resilient. The at least one valve opening may be positioned through two valve seats that are positioned one above the other in spaced relation, with the valve member positioned between the two valve seats. The two valve seats may be resilient.

In another embodiment, a valve for purging air from a fluid system responsive to pressure in the system includes a housing, a valve seat, and a valve plug. The housing has a flow passageway therethrough for accepting pressurized liquid. The valve seat is positioned in the housing defining a valve opening. The valve plug is positioned through the valve opening. The valve plug has a valve stem that extends through the valve opening, an upper closing member at an upper end of the valve stem, and a lower closing member at the lower, opposite end of the valve stem.

Movement of the valve plug is responsive to pressure in the system between a first closed position and a second open position. The first closed position is associated with the presence of pressure that moves the valve plug upwardly through the valve opening such that a surface of the lower closing member blocks the valve opening. The second open position corresponds to a lower operating pressure that permits the valve plug to move downwardly such that the valve opening is no longer blocked to permit air and fluid to travel around the valve plug and through the valve opening.

The valve may also include a third closed position associated with a lowest operating pressure that permits the valve plug to move downwardly to block the valve opening with a surface of the upper closing member. The valve may also include a guide stem coupled to the valve plug. The guide stem helps to guide the movement of the valve plug within the valve opening.

The valve may also include at least one spring biasing the valve stem downwardly. The spring may include one or more of a bellows and a compression spring. The compression spring may be positioned around the guide stem and the bellows may be positioned around one or more of the guide stem and the compression spring.

The valve may also include an indicator coupled to the valve plug for signaling to a user that the valve is under pressure.

In another embodiment, an air release valve for releasing air from a system includes a housing, at least one valve seat, and at least one valve member. The housing has a flow passageway therein for accepting pressurized liquid. The at least one valve seat may be positioned in the housing defining at least one valve opening. The at least one valve member may be for seating on the at least one valve opening and for closing the at least one valve opening responsive to pressure in the system. Movement of the at least one valve member may be responsive to pressure in the system between a closed position and an open position. The closed position may be one or more of: 1) associated with a high operating pressure where the at least one valve member moves upwardly to cover a lower end of the at least one valve opening, and 2) associated with a low operating pressure where the at least one valve member moves downwardly to cover an upper end of the at least one valve opening.

The term "substantially," if used herein, is a term of estimation.

While various features are presented above, it should be understood that the features may be used singly or in any combination thereof. Further, it should be understood that variations and modifications may occur to those skilled in the art to which the claimed examples pertain. The examples described herein are exemplary. The disclosure may enable those skilled in the art to make and use alternative designs having alternative elements that likewise correspond to the elements recited in the claims. The intended scope may thus include other examples that do not differ or that insubstantially differ from the literal language of the claims. The scope of the disclosure is accordingly defined as set forth in the appended claims.

## Claims

1. A release valve for a self-priming pump having a pumping chamber comprising:
a housing having a flow passageway extending therein, said flow passageway having at least one flow passageway inlet for coupling with the pumping chamber;
a pressure responsive valve member positioned in at least one valve opening in the housing and being movable between an open and a closed position, with the open position permitting the travel of air and fluid through the opening and the closed position closing the at least one valve opening, with the valve member being movable between a first closed position in which a surface of the valve member blocks the at least one valve opening, a second open position in which flow is permitted through the at least one valve opening, and a third closed position where a surface of the valve member blocks the at least one valve opening;
a valve outlet coupled to the housing positioned downstream of the at least one valve opening, with flow moving through the valve outlet when the at least one valve opening is in the second open position;
a guide stem coupled to the valve member for assisting in aligning the valve member with the at least one valve opening and permitting movement of the valve member up and down;
wherein the valve is operable between a first position where an upper surface of the valve member abuts a lower surface of the at least one valve opening to close the at least one valve opening, a third position where a lower surface of the valve member abuts an upper surface of the at least one valve opening to close the at least one valve opening, and a second position where the at least one valve opening is not blocked by the valve member, permitting at least air to travel through the at least one valve opening to the valve outlet.

2. The valve of claim 1, further comprising a spring coupled to the guide stem, said spring having a biasing state and an unbiasing state dependent upon the location of the guide stem in the housing.

3. The valve of claim 2, further comprising a bellows surrounding the spring, said bellows optionally providing a biasing function.

4. The valve of claim 1, wherein the housing has a channel at a top end thereof that is open to the atmosphere, with the guide stem being positioned at least in part in the channel; and
further comprising an indicator coupled to the guide stem, said indicator traveling with the movement of the guide stem, wherein when the valve is in the first position, the indicator extends out of the opening at the top end of the channel to indicate the presence of pressure.

5. The valve of claim 1, wherein the position of the valve is determined based upon pressure inside the flow passageway.

6. The valve of claim 1, wherein the valve member is a plug that is "I"-shaped and includes a valve stem having a length, a top cross-member coupled at a top end of the valve stem, and a bottom cross-member coupled at a bottom end of the valve stem.

7. The valve of claim 6, wherein the top cross-member has a rounded or arc-shaped lower surface and the bottom cross-member has a rounded or arc-shaped upper surface.

8. The valve of claim 1, wherein the valve member is substantially "T"-shaped, said plug including a cross-member and a valve stem, with the cross-member positioned transverse to the valve stem and the valve stem coupled to at least an upper surface of the cross-member to form the T-shape, with the cross-member being a plug.

9. The valve of claim 8, wherein the cross-member has an upper surface and a lower surface, and the upper surface is one or more of curved, arc-shaped, convex, rounded, and flat; the lower surface is one or more of curved, arc-shaped, convex, rounded, and flat; and the valve stem forms a substantially vertical leg of the T-shape.

10. The valve of claim 1, wherein the flow passageway further comprises at least one flow passageway outlet in communication with the at least one flow passageway inlet.

11. The valve of claim 3, wherein the spring is a compression spring that is positioned around the guide stem.

12. The valve of claim 1, wherein the valve stem is positioned above the valve member and a vertical position of the valve stem moves upwardly and downwardly based upon movement of the valve member, and further comprising a guide stem coupled to an upper end of the valve stem, wherein the guide stem is one or integral with the valve stem or a separate element that is attached to the guide stem.

13. The valve of claim 1, wherein the flow passageway is a bore through a bottom end of the housing, said bore being in direct communication with the pump chamber.

14. The valve of claim 1, wherein the flow passageway comprises a plurality of bores, each extending in a different direction from one another, said plurality of bores extending through the bottom end of the housing and crossing paths with each of the other bores, said plurality of bores being in direct communication with the pump chamber.

15. The valve of claim 1, wherein the at least one valve opening is positioned through a single valve seat, and the single valve seat is resilient; or
wherein the at least one valve opening is positioned through a plurality of valve seats, and the plurality of valve seats are resilient; or
wherein the at least one valve opening is positioned through two valve seats that are positioned one above the other in spaced relation, with the valve member positioned between the two valve seats, and the two valve seats are resilient.
